# EUROPEAN PATENT APPLICATION

(11) **EP 3 319 374 A1**
(43) Date of publication of application: **09.05.2018**
(21) Application number: 17799216.1
(22) Date of filing: 09.05.2017
(51) Int. Cl.: H04W 52/02, H04W 8/22

(54) **SWITCHBOARD, MANAGEMENT SERVER, AND COMMUNICATION METHOD**

(30) Priority: 16.05.2016 JP 2016098139
(71) Applicant: NTT DOCOMO, INC., Chiyoda-ku Tokyo 100-6150 (JP)
(72) Inventor: FUJISHIMA, Daisuke, Tokyo 100-6150 (JP); YO, Na, Tokyo 100-6150 (JP); MIAO, Zhen, Tokyo 107-0052 (JP); HIGA, Reika, Tokyo 107-0052 (JP)
(74) Representative: Hoffmann Eitle
(86) International application number: PCT/JP2017/017526
(87) International publication number: WO 2017/199791

(57) **Abstract**

A switching equipment in a radio communication system including the switching equipment configured to communicate with a user equipment and a control server configured to manage the user equipment includes: a receiver unit configured to receive an extended idle-mode discontinuous reception parameter for setting in the user equipment from the control server; and a transmitter unit configured to transmit the received extended idle-mode discontinuous reception parameter to the user equipment.

## Description

### TECHNICAL FIELD

The present invention relates to a switching equipment, a control server, and a communication method.

### BACKGROUND ART

In a universal mobile telecommunications system (UMTS) network, long term evolution (LTE) has been specified for the purpose of a new high data rate, a low delay, and the like (Non-Patent Document 1). For the purpose of an increase in bandwidth and an increase in speed from the LTE, systems subsequent to the LTE (such as LTE-Advanced (LTE-A), future radio access (FRA), 4G, and 5G) have been studied.

With a recent decrease in cost of communication devices, technical development of machine-to-machine (M2M) communication in which devices connected to a network communicate with each other to automatically perform control without using a human hand has been actively carried out. Particularly, in the third-generation partnership project (3GPP), optimization of machine type communication (MTC) as a cellular system for the M2M communication has been standardized. In the standardization, various functions to be provided to terminals dedicated to the MTC (also referred to as Internet of things (IoT) terminals) have been studied, and for example, MTC user equipments of which a transmission/reception bandwidth is limited to achieve a decrease in cost have been studied. In another example, since there is a possibility that an MTC user equipment will be disposed in a place such as a deep place or a basement of a building in which building invasion loss is great and radio communication is difficult, MTC user equipments for the purpose of coverage extension have been studied.

An MTC user equipment (UE) is considered to be used in wide fields such as voltameters, gas meters, vending machines, vehicles, and other industrial equipment.

### CITATION LIST

### NON-PATENT DOCUMENT

Non-Patent Document 1: 3GPP TS 36.300 V13.1.0 (2015-09) "Evolved Universal Terrestrial Radio Access (E-UTRA) and Evolved Universal Terrestrial Radio Access Network (E-UTRAN); Overall description; Stage 2"
Non-Patent Document 2: 3GPP TS 23.401 V13.4.0 (2015-09) "General Packet Radio Service (GPRS) enhancements for Evolved Universal Terrestrial Radio Access Network (E-UTRAN) access"

### SUMMARY OF THE INVENTION

### PROBLEM TO BE SOLVED BY THE INVENTION

According to conventional definition in the 3GPP, a user equipment monitors a limit paging signal on duration in a cycle which is designated by discontinuous reception (DRX) and is in an idle state in the other duration, thereby suppressing power consumption. The DRX cycle is 2.56 seconds (2560 sub-frames) in maximum.

In Rel-12 and Rel-13 of the 3GPP, a technique which is called extended idle-mode discontinuous reception (eDRX) has been introduced for the purpose of improved power saving of an MTC user equipment. In the eDRX, a cycle in which a user equipment monitors a paging signal can be extended to 2621.44 seconds (43.69 minutes) in maximum. Parameters for the eDRX (such as a cycle in which a paging signal is monitored) are notified to the user equipment at a timing of attach processing, tracking area update processing, or the like.

Since an MTC user equipment is assumed to be used for various applications, requirements such as giving priority to power saving or giving priority to a frequency in which paging is possible are considered to vary, for example, depending on processes which are performed by a system using the MTC user equipment. Accordingly, the parameters for the eDRX are desirable to be managed by a home subscriber server (HSS)/home location register (HLR) to easily and flexibly set/change the parameters in the units of user equipments or clients.

However, in the current definition of the 3GPP, management of set values of the parameters for the eDRX is actually left to implementation in a mobility management entity (MME) and techniques capable of managing the set values using the HSS/HLR are not defined yet.

Since the eDRX is introduced into 3G in addition to the LTE, the above-mentioned problem can also occur in the 3G.

The technique disclosed herein is made in consideration of the above-mentioned circumstances and an object thereof is to provide a technique capable of managing parameters for eDRX using an HSS/HLR.

### MEANS FOR SOLVING PROBLEM

According to the disclosed technique, there is provided a switching equipment in a radio communication system including the switching equipment configured to communicate with a user equipment and a control server configured to manage the user equipment, the switching equipment including: a receiver unit configured to receive an extended idle-mode discontinuous reception parameter for setting in the user equipment from the control server or another switching equipment to which the user equipment had belonged; and a transmitter unit configured to transmit the received extended idle-mode discontinuous reception parameter to the user equipment.

### EFFECT OF THE INVENTION

According to the disclosed technique, it is possible to provide a technique capable of managing parameters for eDRX using an HSS/HLR.

### BRIEF DESCRIPTION OF DRAWINGS

Fig. 1 is a diagram illustrating an example of a system configuration of a radio communication system according to an embodiment;
Fig. 2 is a sequence diagram illustrating an example of a processing sequence in LTE;
Fig. 3 is a sequence diagram illustrating an example of a processing sequence in 3G;
Fig. 4 is a sequence diagram illustrating an example of a processing sequence when an eDRX value is changed;
Fig. 5 is a diagram illustrating a change example of a standard specification;
Fig. 6 is a diagram illustrating an example of a functional configuration of an MME/SGSN according to the embodiment;
Fig. 7 is a diagram illustrating an example of a functional configuration of an HSS (HLR/HSS) according to the embodiment; and
Fig. 8 is a diagram illustrating an example of a hardware configuration of an MME/SGSN/HSS (HLR/HSS) according to the embodiment.

### MODES FOR CARRYING OUT THE INVENTION

Hereinafter, embodiments of the invention will be described with reference to the accompanying drawings. The embodiments described below are only examples and embodiments of the invention are not limited to the following embodiments. For example, a radio communication system according to the embodiments is assumed to be a 3G-based or LTE-based system, but the invention is not limited to the 3G or the LTE and can be applied to another scheme. In the specification and the appended claims, "LTE" is used in a wide meaning including fifth-generation communication schemes corresponding to Releases 10, 11, 12, 13, and 14 of 3GPP and releases subsequent thereto as well as communication schemes corresponding to Releases 8 and 9 of the 3GPP.

### <System Configuration>

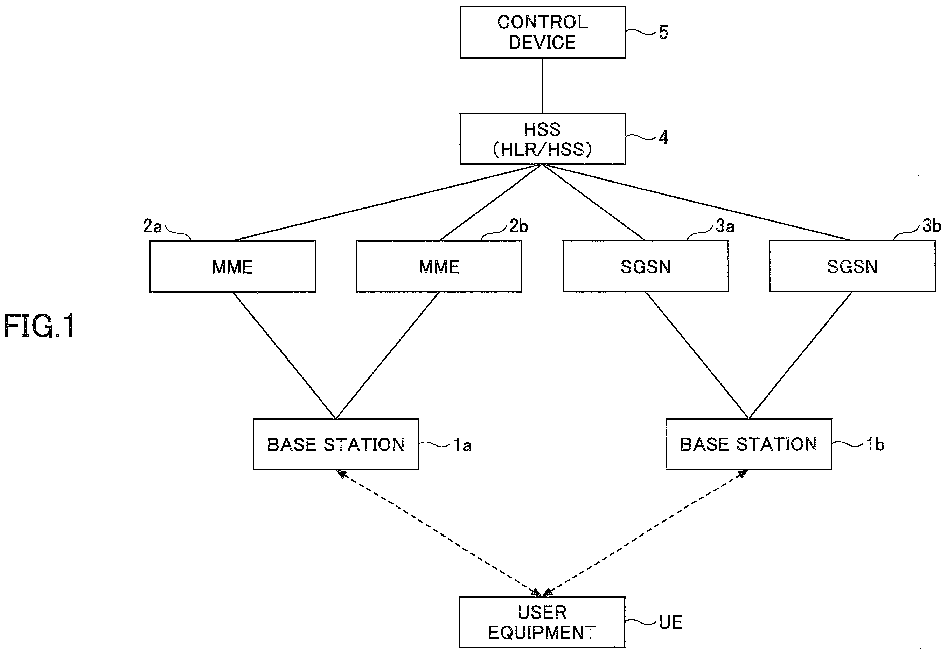

Fig. 1 is a diagram illustrating an example of a system configuration of a radio communication system according to an embodiment. As illustrated in Fig. 1, the radio communication system according to this embodiment includes a user equipment UE, a base station 1a, a base station 1b, an MME 2a, an MME 2b, a serving GPRS support node (SGSN) 3a, an SGSN 3b, an HSS (HLR/HSS) 4, and a control device 5. The system configuration illustrated in Fig. 1 is illustrated to include only devices associated with the embodiment of the invention, but further includes at least devices, which are not illustrated, for performing 3G-based or LTE-based operations.

The user equipment UE has a function of wirelessly communicating with the base station 1a and the base station 1b. The user equipment UE is assumed to be an MTC user equipment, but is not limited thereto. The user equipment UE may support only the 3G, may support only the LTE, or may support both the 3G and the LTE.

The base station 1a is a base station (evolved node B (eNB)) in the LTE and wirelessly communicates with the user equipment UE. The base station 1a is connected to the MME 2a and the MME 2b and relays a non-access stratum (NAS) message or the like which is transmitted and received between the user equipment UE and the MME 2a and the MME 2b. The base station 1b is a base station (radio network controller (RNC), nodeB (NB)) and wirelessly communicates with the user equipment UE in the 3G. The base station 1b is connected to the SGSN 3a and the SGSN 3b, and relays an NAS message which is transmitted and received between the user equipment UE and the SGSN 3a and the SGSN 3b.

The MME 2a and the MME 2b have the same function and are devices that provide a mobility control function and an EPC bearer control function of the user equipment UE. In the following description, when the MME 2a and the MME 2b are not particularly distinguished from each other, the MME 2a and the MME 2b are referred to as "MMEs 2." The radio communication system according to this embodiment may include only one MME 2 or may include three or more MMEs 2.

The SGSN 3a and the SGSN 3b have the same function and are devices that provide a mobility control function and a bearer control function of the user equipment UE. In the following description, when the SGSN 3a and the SGSN 3b are not particularly distinguished from each other, the SGSN 3a and the SGSN 3b are referred to as "SGSNs 3." The radio communication system according to this embodiment may include only one SGSN 3 or may include three or more SGSNs 3.

The HSS (HLR/HSS) 4 is a server that manages positional information and subscriber information of the user equipment UE. The HSS (HLR/HSS) 4 is referred to as an HSS in the LTE and is referred to as an HLR/HSS in the 3G, but is generically referred to as an HSS (HLR/HSS) 4 in the following description.

The control device 5 is a device that manages subscriber contract information or the like and is connected to a client terminal which is disposed in a client window or the like. The control device 5 is connected to the HSS (HLR/HSS) 4 and can perform addition, change, and deletion of subscriber information which is stored in a subscriber database (DB) of the HSS (HLR/HSS) 4 to correspond to addition, change, and deletion of the subscriber contract information.

### <Processing Sequence>

A specific processing sequence which is performed by the radio communication system according to the embodiment will be described below. It is premised that the user equipment UE supports the eDRX. It is also premised that a set value of an eDRX parameter (hereinafter referred to as an "eDRX value") which should be set in the user equipment UE is set in advance in the subscriber DB of the HSS (HLR/HSS) 4 for each subscriber (for each user equipment UE). Examples of the eDRX parameter include a cycle (eDRX cycle length) in which a paging signal should be monitored.

### (LTE)

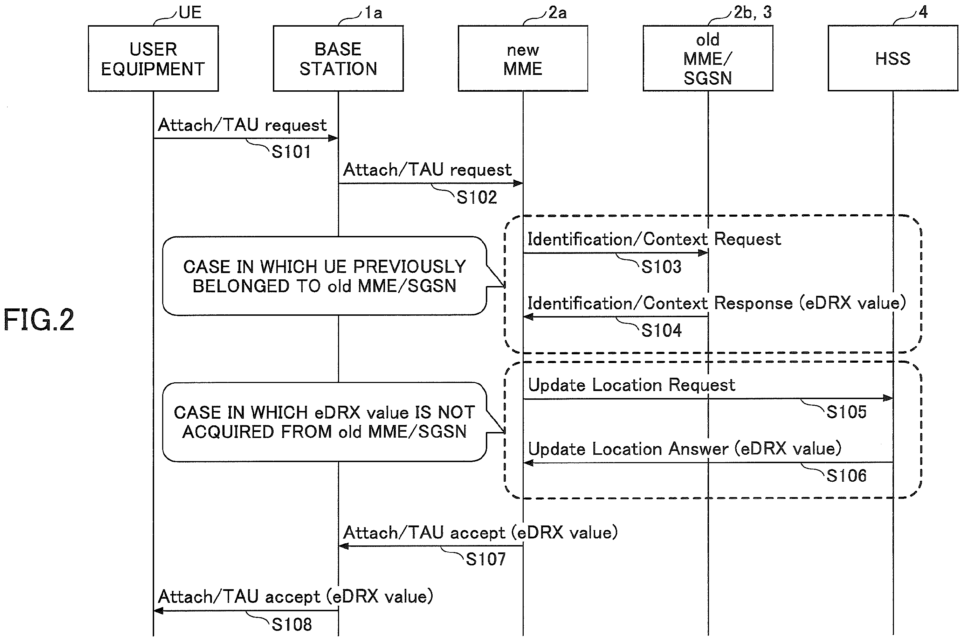

Fig. 2 is a sequence diagram illustrating an example of a processing sequence in the LTE. In Fig. 2, the MME 2a is an MME 2 (a new MME) to which the user equipment UE belongs (in which the user equipment UE is serviced), the MME 2b or the SGSN 3 is an old MME 2 (an old MME) or an old SGSN 3 (an old SGSN) to which the user equipment UE had belonged (in which the user equipment UE was serviced) before belonging to (being serviced in) the MME 2a.

First, the user equipment UE transmits an attach request or a TAU request to the MME 2a via the base station 1a (S101, S102). The attach request is an NAS message which is transmitted when the user equipment UE is attached to the network, and the TAU request is an NSA message which is transmitted when a TA is updated due to movement of the user equipment UE.

Subsequently, the MME 2a transmits an identification request or a context request to the MME 2b or the SGSN 3 in which the user equipment UE was previously serviced (S103). The identification request is a message which is used when the attach request is received from the user equipment UE, and the context request is a message which is used when the TAU request is received from the user equipment UE. When the MME 2b or the SGSN 3 in which the user equipment UE was previously serviced is not recognized (which includes, for example, a case in which the user equipment UE is first serviced in a network), the MME 2a determines that the "eDRX value" is not received (acquired) from the MME 2b or the SGSN 3 and performs the process of Step S105 without performing the process of Step S103.

Subsequently, the MME 2b or the SGSN 3 transmits an identification response or a context response including the "eDRX value" to the MME 2a (S104). When the MME 2b or the SGSN 3 does not hold the "eDRX value" of the user equipment UE, the MME 2b or the SGSN 3 transmits an identification response or a context response not including the "eDRX value" to the MME 2a.

When the "eDRX value" is not received (acquired) from the MME 2b or the SGSN 3, the MME 2a transmits an update location request to the HSS (HLR/HSS) 4 to acquire the "eDRX value" (S105). On the other hand, when the "eDRX value" is received from the MME 2b or the SGSN 3, the process of Step S107 is performed. Examples of a case in which the "eDRX value" is not received from the MME 2b or the SGSN 3 include a case in which the "eDRX value" is not included in the identification response or the context response received from the MME 2b or the SGSN 3 and a case in which the "eDRX value" included in the identification response or the context response received from the MME 2b or the SGSN 3 is a false value in addition to the above-mentioned "case in which the MME 2a does not recognize the MME 2b or the SGSN 3 in which the user equipment UE was previously serviced."

Subsequently, the HSS (HLR/HSS) 4 acquires an "eDRX value" of the user equipment UE from the subscriber DB thereof, and transmits an update location answer including the acquired "eDRX value" to the MME 2a (S106). Since the update location request includes an ID (international mobile subscriber identity (IMSI)) for specifying the user equipment UE, the HSS (HLR/HSS) 4 can acquire the "eDRX value" for each user equipment UE by searching the subscriber DB using the IMSI as a key.

Subsequently, the MME 2a transmits an attach accept or a TAU accept including the "eDRX value" to the user equipment UE via the base station 1a (S107, S108).

### (3G)

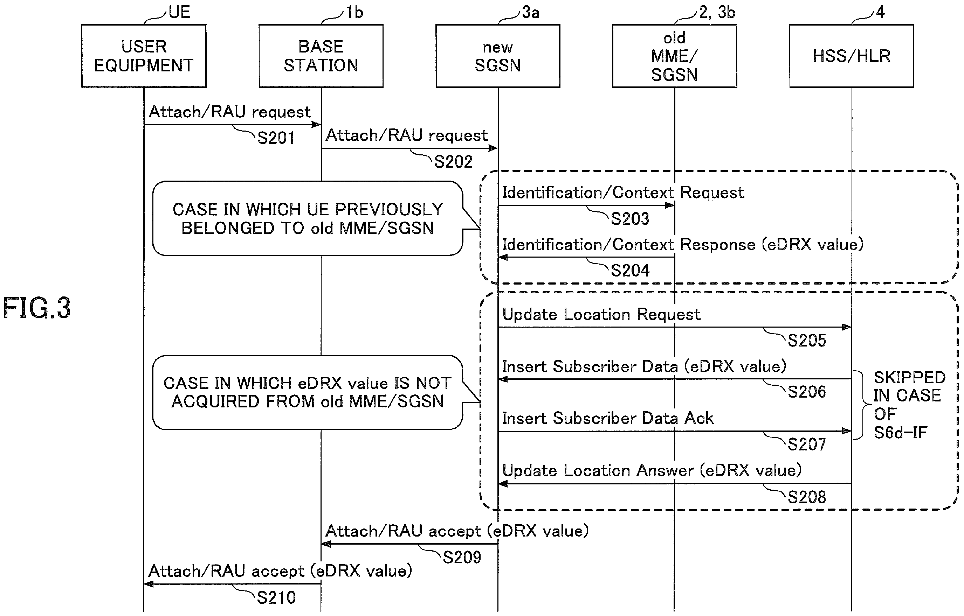

Fig. 3 is a sequence diagram illustrating an example of a processing sequence in the 3G. In Fig. 3, the SGSN 3a is an SGSN 3 (a new SGSN) in which a user equipment UE is serviced, the MME 2 or the SGSN 3b is an old MME 2 (an old MME) or an old SGSN 3 (an old SGSN) in which the user equipment UE was serviced before being serviced in the SGSN 3a.

First, the user equipment UE transmits an attach request or a RAU request to the SGSN 3a via the base station 1b (S201, S202). The attach request is an NAS message which is transmitted when the user equipment UE is attached to the network, and the RAU request is an NSA message which is transmitted when an RA (routing area) is updated due to movement of the user equipment UE.

Subsequently, the SGSN 3a transmits an identification request or a context request to the MME 2 or the SGSN 3b in which the user equipment UE was previously serviced (S203). The identification request is a message which is used when the attach request is received from the user equipment UE, and the context request is a message which is used when the RAU request is received from the user equipment UE. When the MME 2 or the SGSN 3b in which the user equipment UE was previously serviced is not recognized (which includes, for example, a case in which the user equipment UE is first serviced in a network), the SGSN 3a determines that the "eDRX value" is not received (acquired) from the MME 2 or the SGSN 3b and performs the process of Step S205 without performing the process of Step S203.

Subsequently, the MME 2 or the SGSN 3b transmits an identification response or a context response including the "eDRX value" to the SGSN 3a (S204). When the MME 2 or the SGSN 3b does not hold the "eDRX value" of the user equipment UE, the MME 2 or the SGSN 3b transmits an identification response or a context response not including the "eDRX value" to the SGSN 3a.

When the "eDRX value" is not received (acquired) from the MME 2 or the SGSN 3b, the SGSN 3a transmits an update location request to the HSS (HLR/HSS) 4 to acquire the "eDRX value" (S205). On the other hand, when the "eDRX value" is received from the MME 2 or the SGSN 3b, the process of Step S209 is performed. Examples of a case in which the "eDRX value" is not received from the MME 2 or the SGSN 3b include a case in which the "eDRX value" is not included in the identification response or the context response received from the MME 2 or the SGSN 3b and a case in which the "eDRX value" included in the identification response or the context response received from the MME 2 or the SGSN 3b is a false value in addition to the above-mentioned "case in which the SGSN 3a does not recognize the MME 2 or the SGSN 3b in which the user equipment UE was previously serviced."

Subsequently, the HSS (HLR/HSS) 4 acquires an "eDRX value" of the user equipment UE from the subscriber DB thereof, and transmits an insert subscriber data including the acquired "eDRX value" to the SGSN 3a (S206). Since the update location request includes an ID (international mobile subscriber identity (IMSI)) for specifying the user equipment UE, the HSS (HLR/HSS) 4 can acquire the "eDRX value" for each user equipment UE by searching the subscriber DB using the IMSI as a key.

Subsequently, the SGSN 3a transmits an insert subscriber data Ack to the HSS (HLR/HSS) 4 (S207). Subsequently, the HSS (HLR/HSS) 4 transmits an update location answer to the SGSN 3a (S208).

The processes of Steps S205 to S208 correspond to a case in which a Gr interface is used between the SGSN 3a and the HSS (HLR/HSS) 4. When an S6d interface is used between the SGSN 3a and the HSS (HLR/HSS) 4, the processes of Steps S206 and S207 are skipped and the HSS (HLR/HSS) 4 transmits an update location answer including the "eDRX value" to the SGSN 3a (S208).

Subsequently, the SGSN 3a transmits an attach accept or an RAU accept including the "eDRX value" to the user equipment UE via the base station 1b (S209, S210).

### (Change of "eDRX Value")

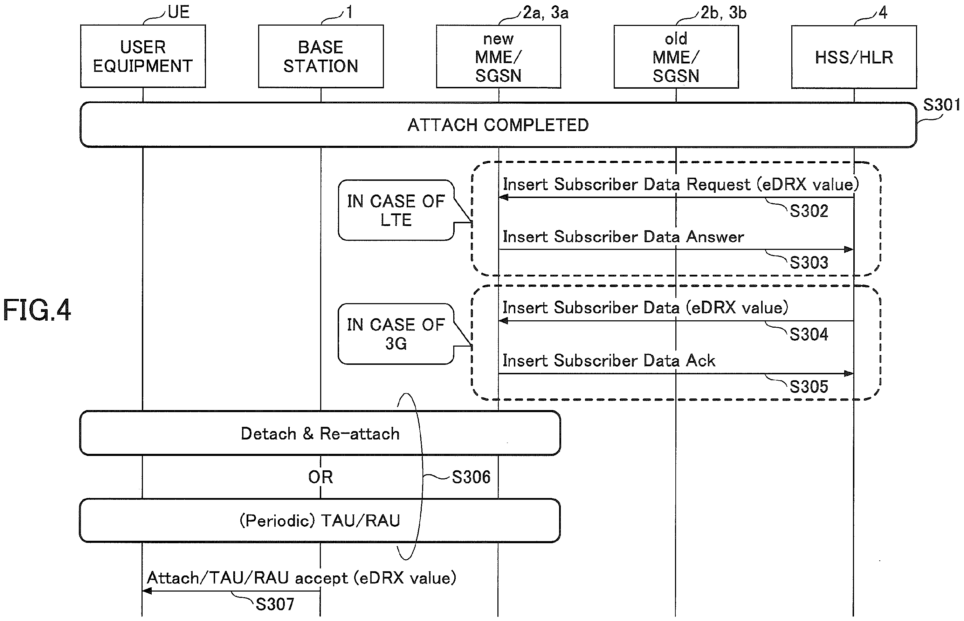

Fig. 4 is a sequence diagram illustrating an example of a processing sequence when the eDRX value is changed. Steps S302 and S303 are processes in the LTE and Steps S304 and S305 are processes in the 3G.

When the "eDRX value" set in the subscriber DB of the HSS (HLR/HSS) 4 is changed after the user equipment UE is attached to an LTE network (S301), the HSS (HLR/HSS) 4 transmits an insert subscriber data request including the changed "eDRX value" to the MME 2a (S302). Subsequently, the MME 2a transmits an insert subscriber data answer to the HSS (HLR/HSS) 4 (S303).

When the "eDRX value" set in the subscriber DB of the HSS (HLR/HSS) 4 is changed after the user equipment UE is attached to a 3G network (S301), the HSS (HLR/HSS) 4 transmits an insert subscriber data including the changed "eDRX value" to the SGSN 3a (S304). Subsequently, the SGSN 3a transmits an insert subscriber data Ack to the HSS (HLR/HSS) 4 (S305).

Subsequently, the MME 2a or the SGSN 3a transmits an attach accept, a TAU accept, or an RAU accept including the "eDRX value" to the user equipment UE (S307) after the user equipment UE is instructed to perform detach or re-attach, or after waiting until a (periodic) TAU (TA update) or an RAU (RA update) (S306).

The specific processing sequence which is performed by the radio communication system according to the embodiment has been described hitherto. When management of the set value of the eDRX parameter is left to implementation in the MME 2 as in the related art, it is necessary to rewrite a management file or the like in the MME 2 at the time of setting or changing the eDRX parameter and thus it is difficult to easily set the parameter due to a large burden of an operator in charge of maintenance. When different parameters are set and changed for each subscriber, it is necessary to set and change the management file or the like in the MME in the units of IMSIs, thereby causing an increase in burden of the an operator in charge of maintenance.

On the other hand, according to this processing sequence, it is possible to unitarily manage the eDRX parameter using the subscriber DB of the HSS (HLR/HSS) 4 and to easily and flexibly set/change the parameter depending on demand of each subscriber or the like for each type of the MTC user equipments, for example, using the control device 5.

### (Change Example of Specification)

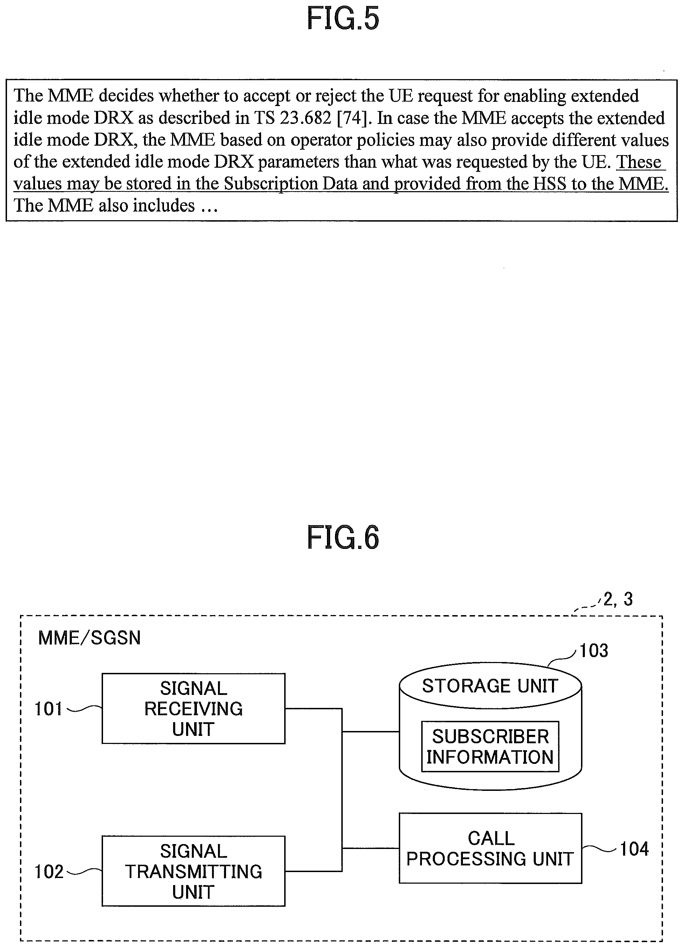

Fig. 5 illustrates an example when a standard specification (TS 23.401) of the 3GPP according to this embodiment is changed.

### <Functional Configuration>

An example of the functional configurations of the MME 2, the SGSN 3, and the HSS (HLR/HSS) 4 which perform the operation in the embodiment of the invention.

### (MME/SGSN)

Fig. 6 is a diagram illustrating an example of a functional configuration of the MME/SGSN according to the embodiment. As illustrated in Fig. 6, the MME 2 and the SGSN 3 include a signal receiving unit 101, a signal transmitting unit 102, a storage unit 103, and a call processing unit 104. Fig. 6 illustrates only functional units, which are particularly associated with the embodiment of the invention, in the MME 2 and the SGSN 3, and the MME 2 and the SGSN 3 have at least a function, which is not illustrated, for performing operations based on the 3G and the LTE. The functional configuration illustrated in Fig. 6 is only an example. The functional subdivision and the names of the functional units are not particularly limited as long as the operations associated with the embodiment can be performed.

The signal receiving unit 101 has a function of receiving various signals from the user equipment UE, the MME 2, the SGSN 3, and the HSS (HLR/HSS) 4. The signal receiving unit 101 has a function of receiving (acquiring) the "eDRX value" which is set in the user equipment UE from the HSS (HLR/HSS) 4 or the MME 2 or SGSN 3 in which the user equipment UE is serviced.

When the "eDRX value" which is set in the user equipment UE is not received (acquired) from the MME 2 or SGSN 3 in which the user equipment UE is serviced, the signal receiving unit 101 may acquire the "eDRX value" which is set in the user equipment UE from the HSS (HLR/HSS) 4.

The signal transmitting unit 102 has a function of transmitting various signals to the user equipment UE, the MME 2, the SGSN 3, and the HSS (HLR/HSS) 4. The signal transmitting unit 102 has a function of transmitting the "eDRX value" received (acquired) by the signal receiving unit 101 to the user equipment UE.

The storage unit 103 has a function of storing subscriber information (which includes the "eDRX value") received from the HSS (HLR/HSS) 4.

The call processing unit 104 has a function of performing call processing using various signals received by the signal receiving unit 101. The call processing unit 104 has a function of generating various signals necessary for the call processing and transmitting the generated signals via the signal transmitting unit 102.

### (HSS (HLR/HSS))

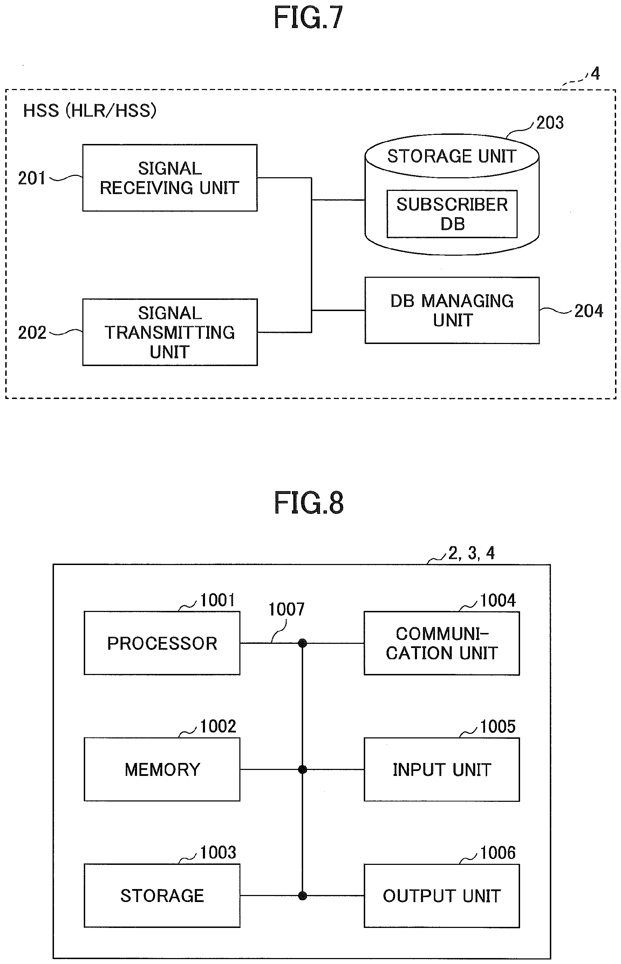

Fig. 7 is a diagram illustrating an example of the functional configuration of the HSS (HLR/HSS) according to the embodiment. As illustrated in Fig. 7, the HSS (HLR/HSS) 4 includes a signal receiving unit 201, a signal transmitting unit 202, a storage unit 203, and a DB managing unit 204. Fig. 7 illustrates only functional units, which are particularly associated with the embodiment of the invention, in the HSS (HLR/HSS) 4 and the HSS (HLR/HSS) 4 have at least a function, which is not illustrated, for performing operations based on the 3G and the LTE. The functional configuration illustrated in Fig. 7 is only an example. The functional subdivision and the names of the functional units are not particularly limited as long as the operations associated with the embodiment can be performed.

The signal receiving unit 201 has a function of receiving various signals from the MME 2 and the SGSN 3.

The signal transmitting unit 202 has a function of transmitting various signals to the MME 2 and the SGSN 3. The signal transmitting unit 202 has a function of transmitting an "eDRX value" which is set in the user equipment UE to the MME 2 or the SGSN 3 when a request is received from the MME 2 or the SGSN 3 or when the "eDRX value" is changed.

The storage unit 203 stores a subscriber DB. The subscriber DB stores subscriber information (which includes the "eDRX value") for each user equipment UE. The DB managing unit 204 has a function of performing addition, change, and deletion of the subscriber information stored in the subscriber DB in accordance with an instruction from the control device 5.

### <Hardware Configuration>

The block diagrams (Figs. 6 and 7) which are used above to describe the embodiment illustrate blocks in the units of functions. The functional blocks (constituent units) are embodied in an arbitrary combination of hardware and/or software. Means for embodying the functional blocks is not particularly limited. That is, the functional blocks may be embodied by one unit which is physically and/or logically coupled or may be embodied by two or more units which are physically and/or logically separated and which are connected directly and/or indirectly (for example, in a wired and/or wireless manner).

For example, the MME 2, the SGSN 3, and the HSS (HLR/HSS) 4 in the embodiment of the invention may function as computers that perform the processes of the communication method according to the invention. Fig. 8 is a diagram illustrating an example of a hardware configuration of the MME, the SGSN, and the HSS (HLR/HSS) according to the invention. The MME 2, the SGSN 3, and the HSS (HLR/HSS) 4 may be physically configured as computer devices including a processor 1001, a memory 1002, a storage 1003, a communication unit 1004, an input unit 1005, an output unit 1006, and a bus 1007.

In the following description, a word "unit" may be referred to as a circuit, a device, a unit, or the like. The hardware configurations of the MME 2, the SGSN 3, and the HSS (HLR/HSS) 4 may include one or more units illustrated in the drawing or may not include some units.

The functions of the MME 2, the SGSN 3, and the HSS (HLR/HSS) 4 are embodied by causing hardware such as the processor 1001 and the memory 1002 to read predetermined software (a program) and causing the processor 1001 to perform computation and to control communication of the communication unit 1004 and reading and/or writing of data in the memory 1002 and the storage 1003.

The processor 1001 controls the computer as a whole, for example, by operating an operating system. The processor 1001 may be constituted by a central processing unit (CPU) including an interface with peripherals, a control unit, a calculation unit, a register, and the like. For example, the signal receiving unit 101, the signal transmitting unit 102, the storage unit 103, and the call processing unit 104 of the MME 2 and the SGSN 3, and the signal receiving unit 201, the signal transmitting unit 202, the storage unit 203, and the DB managing unit 204 of the HSS (HLR/HSS) 4 may be embodied by the processor 1001.

The processor 1001 reads a program (program codes), a software module, or data from the storage 1003 and/or the communication unit 1004 to the memory 1002 and performs various processes in accordance therewith. As the program, a program causing a computer to perform at least a part of the operations described above in the embodiment is used. For example, the signal receiving unit 101, the signal transmitting unit 102, the storage unit 103, and the call processing unit 104 of the MME 2 and the SGSN 3 and the signal receiving unit 201, the signal transmitting unit 202, the storage unit 203, and the DB managing unit 204 of the HSS (HLR/HSS) 4 may be embodied by a control program which is stored in the memory 1002 and operated by the processor 1001 or the other functional blocks may be similarly embodied. Various processes described above have been described to be performed by a single processor 1001, but may be simultaneously or sequentially performed by two or more processors 1001. The processor 1001 may be mounted as one or more chips. The program may be transmitted from a network via an electric communication line.

The memory 1002 is a computer-readable recording medium and may be constituted, for example, by at least one of a read only memory (ROM), an erasable programmable ROM (EPROM), an electrically erasable programmable ROM (EEPROM), and a random access memory (RAM). The memory 1002 may be referred to as a register, a cache, or a main memory (a main storage unit). The memory 1002 can store a program (program codes), a software module, or the like which can be executed to perform the communication method according to the embodiment of the invention.

The storage 1003 is a computer-readable recording medium and may be constituted, for example, by at least one of an optical disc such as a compact disc ROM (CD-ROM), a hard disk drive, a flexible disk, a magneto-optical disk (such as a compact disk, a digital versatile disk, or a Blu-ray (registered trademark) disk), a smart card, a flash memory (such as a card, a stick, or a key drive), a floppy (registered trademark) disk, and a magnetic strip. The storage 1003 may be referred to as an auxiliary storage unit. Examples of the recording medium may include a database including the memory 1002 and/or the storage 1003, a server, and another appropriate medium.

The communication unit 1004 is hardware (a transceiver device) that allows communication between computers via a wired and/or wireless network and is referred to as, for example, a network device, a network controller, a network card, or a communication module. For example, the signal receiving unit 101 and the signal transmitting unit 102 of the MME 2 and the SGSN 3 and the signal receiving unit 201 and the signal transmitting unit 202 of the HSS (HLR/HSS) 4 may be embodied by the communication unit 1004.

The input unit 1005 is an input device (such as a keyboard, a mouse, a microphone, a switch, a button, or a sensor) that receives an input from the outside. The output unit 1006 is an output device (such as a display, a speaker, or an LED lamp) that performs outputting to the outside. The input unit 1005 and the output unit 1006 may be configured as a unified body (such as a touch panel).

The units such as the processor 1001 and the memory 1002 are connected to each other via the bus 1007 for transmitting and receiving information. The bus 1007 may be constituted by a single bus or may be configured by different buses for the units.

The MME 2, the SGSN 3, and the HSS (HLR/HSS) 4 may be configured to include hardware such as a microprocessor, a digital signal processor (DSP), an application specific integrated circuit (ASIC), a programmable logic device (PLD), or a field programmable gate array (FPGA) or a part or all of the functional blocks may be embodied by the hardware. For example, the processor 1001 may be mounted as at least one hardware.

### <Conclusion>

According to the above-mentioned embodiment, there is provided a switching equipment in a radio communication system including the switching equipment configured to communicate with a user equipment and a control server configured to manage the user equipment, the switching equipment including: a receiver unit configured to receive an extended idle-mode discontinuous reception parameter which is set in the user equipment from the control server or another switching equipment in which the user equipment is serviced; and a transmitter unit configured to transmit the received extended idle-mode discontinuous reception parameter to the user equipment. According to the switching equipment, it is possible to provide a technique capable of managing parameters for eDRX using an HSS/HLR.

The receiver unit may receive the extended idle-mode discontinuous reception parameter which is set in the user equipment from the control server when the extended idle-mode discontinuous reception parameter which is set in the user equipment is not received from another switching equipment in which the user equipment is serviced. Accordingly, in comparison with a method of always acquiring the eDRX parameter from the HSS (HLR/HSS) 4, it is possible to suppress a processing load of the HSS (HLR/HSS) 4.

According to the embodiment, there is provided a control server in a radio communication system including a switching equipment configured to communicate with a user equipment and the control server configured to manage the user equipment, the control server including: a storage unit configured to store an extended idle-mode discontinuous reception parameter which is set in the user equipment for each user equipment; and a transmitter unit configured to transmit the received extended idle-mode discontinuous reception parameter which is set in the user equipment to the switching equipment when a request is received from the switching equipment or when an extended idle-mode discontinuous reception parameter is changed. According to the control server, it is possible to provide a technique capable of managing parameters for eDRX using an HSS/HLR.

According to the embodiment, there is provided a communication method which is performed by a switching equipment in a radio communication system including the switching equipment configured to communicate with a user equipment and a control server configured to manage the user equipment, the communication method including: a step of receiving an extended idle-mode discontinuous reception parameter which is set in the user equipment from the control server or another switching equipment in which the user equipment is serviced; and a step of transmitting the received extended idle-mode discontinuous reception parameter to the user equipment. According to the communication method, it is possible to provide a technique capable of managing parameters for eDRX using an HSS/HLR.

### <Complement of Embodiment>

The aspects/embodiments described in this specification may be applied to a system employing long term evolution (LTE), LTE-advanced (LTE-A), SUPER 3G, IMT-Advanced, 4G, 5G, future radio access (FRA), W-CDMA (registered trademark), GSM (registered trademark), CDMA2000, ultra mobile broadband (UMB), IEEE 802.11 (Wi-Fi), IEEE 802.16 (WiMAX), IEEE 802.20, ultra-wideband (UWB), Bluetooth (registered trademark), or other appropriate systems and/or a next-generation system which is extended on the basis thereof.

The processing sequences, the sequences, the flowcharts, and the like of the aspects/embodiments described above in this specification may be changed in the order as long as they are not incompatible with each other. For example, in the method described in this specification, various steps as elements are described in an exemplary order and the method is not limited to the described order.

The input and output information or the like may be stored in a specific place (for example, a memory) or may be managed in a management table. The input and output information or the like may be overwritten, updated, or added. The output information or the like may be deleted. The input information or the like may be transmitted to another device.

The terms "system" and "network" which are used in this specification are compatibly used.

The user equipment UE may also be referred to as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or several appropriate terms by those skilled in the art.

An expression "on the basis of ∼" which is used in this specification does not refer to "on the basis of only ∼," unless apparently described. In other words, the expression "on the basis of ∼" refers to both "on the basis of only ∼" and "on the basis of at least ∼."

So long as terms "include" and "including" and modifications thereof are used in this specification or the appended claims, the terms are intended to have a comprehensive meaning similar to a term "comprising." A term "or" which is used in this specification or the claims is intended not to mean an exclusive logical sum.

Notification (transmission/reporting) of information is not limited to what is described in an aspect/embodiment in the present specification, and may be performed by using another method. For example, the notification (transmission/reporting) of information may be performed by using physical layer signaling (e.g., DCI (Downlink Control Information), UCI (Uplink Control Information)), upper layer signaling (e.g., RRC signaling, MAC signaling, broadcast information (MIB (Master Information Block), SIB (System Information Block))), other signals, or a combination thereof. Further, an RRC message may be referred to as RRC signaling. Further, the RRC message may be, for example, an RRC Connection Setup message, an RRC Connection Reconfiguration message, or the like.

A decision or a determination may be realized by a value (0 or 1) represented by one bit, by a boolean value (true or false), or by comparison of numerical values (e.g., comparison with a predetermined value).

It should be noted that a term used in the present specification and/or a term required for understanding of the present specification may be replaced by a term having the same or similar meaning. For example, a channel and/or a symbol may be a signal. Further, a signal may be a message.

Aspects/embodiments described in the present specification may be used independently, may be combined to be used, or may be switched while being used. Further, notification (transmission/reporting) of predetermined information (e.g., notification (transmission/reporting) of "X") is not limited to an explicit notification (transmission/reporting), and may be performed by an implicit notification (transmission/reporting) (e.g., by not performing notification (transmission/reporting) of the predetermined information).

A term "determining" used in the present specification may include various actions or operations. The "determining" may include, for example, a case in which "calculating", "computing", "processing", "deriving", "investigating", "looking up" (e.g., looking up a table, database, or other data structures), or "ascertaining" is deemed as "determining". Further, the "determining" may include a case in which "receiving" (e.g., receiving information), "transmitting" (e.g., transmitting information), "inputting", "outputting", or "accessing" (e.g., accessing data in a memory) is deemed as "determining". Further, the "determining" may include a case in which "resolving", "selecting", "choosing", "establishing", "comparing", or the like is deemed as "determining". In other words, the "determining" may include a case in which a certain action or operation is deemed as "determining".

Notification (transmission/reporting) of predetermined information (e.g., notification (transmission/reporting) of "X") is not limited to an explicit notification (transmission/reporting), and may be performed by an implicit notification (transmission/reporting) (e.g., by not performing notification (transmission/reporting) of the predetermined information).

Information, a signal, or the like, described in the present specification may represented by using any one of various different technologies. For example, data, an instruction, a command, information, a signal, a bit, a symbol, a chip, or the like, described throughout the present application, may be represented by a voltage, an electric current, electromagnetic waves, magnetic fields, a magnetic particle, optical fields, a photon, or a combination thereof.

While the invention has been described above in detail, it is apparent to those skilled in the art that the invention is not limited to the embodiment described above in the specification. The invention can be modified and embodied as a changed aspect without departing from the concept and scope of the invention which are defined by the appended claims. Accordingly, description in this specification is made for illustrative explanation and does not have any restrictive meaning.

In the above-mentioned embodiment, the MME 2 or the SGSN 3 is an example of a switching equipment. The HSS (HLR/HSS) 4 is an example of a control server. The "eDRX value" is an example of an extended idle-mode discontinuous reception parameter.

The embodiments described above may be described by using the following notes.

### (Note 1)

A switching equipment in a radio communication system including the switching equipment configured to communicate with a user equipment and a control server configured to manage the user equipment, the switching equipment comprising:
a receiver unit configured to receive an extended idle-mode discontinuous reception parameter for setting in the user equipment from the control server or another switching equipment to which the user equipment had belonged; and
a transmitter unit configured to transmit the received extended idle-mode discontinuous reception parameter to the user equipment.

### (Note 2)

The switching equipment according to claim 1, wherein the receiver unit receives the extended idle-mode discontinuous reception parameter for setting in the user equipment from the control server when the extended idle-mode discontinuous reception parameter for setting in the user equipment is not received from another switching equipment to which the user equipment had belonged.

### (Note 3)

A control server in a radio communication system including a switching equipment configured to communicate with a user equipment and the control server configured to manage the user equipment, the control server comprising:
a storage unit configured to store an extended idle-mode discontinuous reception parameter for setting in the user equipment for each user equipment; and
a transmitter unit configured to transmit the received extended idle-mode discontinuous reception parameter for setting in the user equipment to the switching equipment when a request is received from the switching equipment or when the extended idle-mode discontinuous reception parameter is changed.

### (Note 4)

A communication method which is performed by a switching equipment in a radio communication system including the switching equipment configured to communicate with a user equipment and a control server configured to manage the user equipment, the communication method comprising:
a step of receiving an extended idle-mode discontinuous reception parameter for setting in the user equipment from the control server or another switching equipment to which the user equipment had belonged; and
a step of transmitting the received extended idle-mode discontinuous reception parameter to the user equipment.

The present application is based on and claims the benefit of priority of Japanese Priority Application No. 2016-098139 filed on May 16, 2016, the entire contents of which are hereby incorporated herein by reference.

### EXPLANATIONS OF LETTERS OR NUMERALS

- UE: user equipment
- 1: base station
- 2: MME
- 3: SGSN
- 4: HSS (HLR/HSS)
- 5: control device
- 101: signal receiving unit
- 102: signal transmitting unit
- 103: storage unit
- 104: call processing unit
- 201: signal receiving unit
- 202: signal transmitting unit
- 203: storage unit
- 204: DB managing unit
- 1001: processor
- 1002: memory
- 1003: storage
- 1004: communication unit
- 1005: input unit
- 1006: output unit

## Claims

1. A switching equipment in a radio communication system including the switching equipment configured to communicate with a user equipment and a control server configured to manage the user equipment, the switching equipment comprising:
a receiver unit configured to receive an extended idle-mode discontinuous reception parameter for setting in the user equipment from the control server or another switching equipment to which the user equipment had belonged; and
a transmitter unit configured to transmit the received extended idle-mode discontinuous reception parameter to the user equipment.

2. The switching equipment according to claim 1, wherein the receiver unit receives the extended idle-mode discontinuous reception parameter for setting in the user equipment from the control server when the extended idle-mode discontinuous reception parameter for setting in the user equipment is not received from another switching equipment to which the user equipment had belonged.

3. A control server in a radio communication system including a switching equipment configured to communicate with a user equipment and the control server configured to manage the user equipment, the control server comprising:
a storage unit configured to store an extended idle-mode discontinuous reception parameter for setting in the user equipment for each user equipment; and
a transmitter unit configured to transmit the received extended idle-mode discontinuous reception parameter for setting in the user equipment to the switching equipment when a request is received from the switching equipment.

4. A communication method which is performed by a switching equipment in a radio communication system including the switching equipment configured to communicate with a user equipment and a control server configured to manage the user equipment, the communication method comprising:
a step of receiving an extended idle-mode discontinuous reception parameter for setting in the user equipment from the control server; and
a step of transmitting the received extended idle-mode discontinuous reception parameter to the user equipment.
